Europäisches Patentamt

European Patent Office

Office européen des brevets

(19)

(11) **EP 0 933 606 B1**

(12) **EUROPEAN PATENT SPECIFICATION**

(45) Date of publication and mention
of the grant of the patent:
**10.11.2004   Bulletin 2004/46**

(51) Int Cl.[7]: **F25D 29/00**, G01R 21/00,
G01R 31/01, G01M 19/00

(21) Application number: **99300251.8**

(22) Date of filing: **13.01.1999**

(54) **Refrigerator testing**

Prüfung von Kältemaschinen

Contrôle de réfrigérateurs

(84) Designated Contracting States:
**DE FR GB**

(30) Priority:  **03.02.1998   KR 9802887**

(43) Date of publication of application:
**04.08.1999   Bulletin 1999/31**

(73) Proprietor: **Samsung Electronics Co., Ltd.
Suwon-si, Gyeonggi-do 442-742 (KR)**

(72) Inventors:
 • **Park, Yong-jong
   Sungnam, Kyonggi-do (KR)**

 • **Bae, Hak-kyun
   Suwon, Kyonggi-do (KR)**
 • **Shin, Kyo-ho
   Suwon, Kyonggi-do (KR)**

(74) Representative: **Geary, Stuart Lloyd et al
Venner Shipley LLP
20 Little Britain
London EC1A 7DH (GB)**

(56) References cited:
   **EP-A- 0 572 940            AT-B- 391 029
   DD-A- 268 075**

**Description**

The present invention relates to a method of predicting the electrical power consumption, in a predetermined period, of a refrigerator including refrigeration and freezing compartments, a compressor for compressing a working fluid of a heat pump and a defrosting heater. The present invention also relates to a corresponding apparatus for predicting the electrical power consumption, in a predetermined period, of a refrigerator including refrigeration and freezing compartments, a compressor for compressing a working fluid of a heat pump and a defrosting heater.

As is known well, electric refrigerators and freezers must meet national standards concerning their power consumption. These standards lay down tests by which the power consumption is to be measured and at least one standard requires the determination of the average power consumption for a period of one month.

According to one standard, the power consumption is measured under the conditions of an average ambient temperature 30± 11°C with the internal temperature of the refrigeration being maintained at 3±0.5°°C. The conditions for freezers are shown in Table 1.

Table 1.

| Temperature in the freezing compartment (°C) | | | |
|---|---|---|---|
| Type of freezing room | one asters | two asters | three and four asters |
| average temperature | -6± 0.5 | -12± 0.5 | -18± 0.5 |

This standard also prescribes performing the following refrigerator tests, after the internal temperature of the refrigerator has stabilised:-

1.The test is carried out for 24 hours in principle. In the case that defrosting which is forcedly performed at the start of the test and automatic defrosting are completed twice or more, the test is performed for 24 hours. If automatic defrosting is not performed, however, the test is continued for 48 hours. Whereas, if automatic defrosting is performed within the 24 hours, the test is completed at the end of 24 hours. Furthermore, if automatic defrosting is not carried out in the refrigerator within 48 hours, the test is extended to 72 hours. The completion of automatic defrosting is when the temperature in the freezing compartment reaches the temperature specified in Table 1.

2. Defrosting is as follows:

A. If manual defrosting must be started, defrosting is not carried out.
B. If defrosting must be carried out in any other manner, defrosting is forcedly carried out at the start of the test.
C. If it is impossible to forcedly carry out defrosting, the time that defrosting is automatically carried out is regarded as the start time of the test.

3. The test for measuring electric power consumption is carried out with a heater for preventing condensation on the walls of the refrigerating compartment and an added device having various functions, which has no effect on a refrigeration performance, operating.

The electric power consumption of the refrigerator which is measured under the described test conditions is calculated for a month using formulas below:

$$Wy = Wd \times 365$$

$$Wmy = Wy \div 12$$

where Wd is a daily power consumption (KWh/day), Wy is an annual power consumption (KWh/year), and Wmy is an average consumption for a month (KWh/month).

The test for measuring the amount of the electric power consumption is carried out under the condition set out in the Korean Standards, for example KSC9305.

A system for measuring the amount of the electric power consumption under the above conditions will be described below.

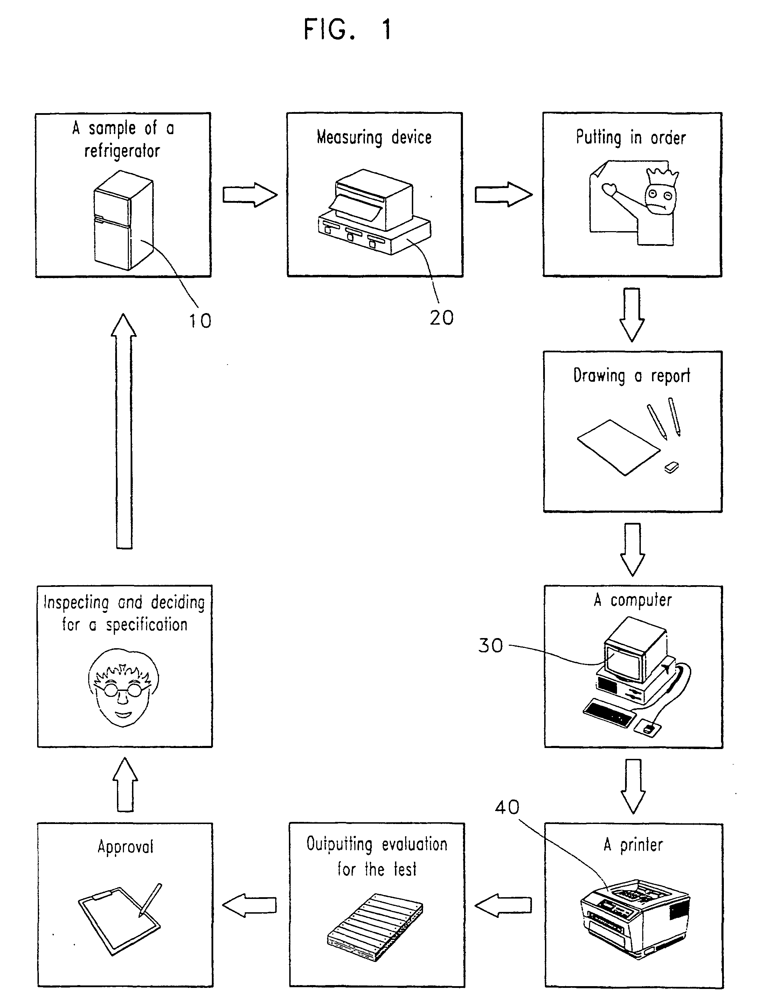

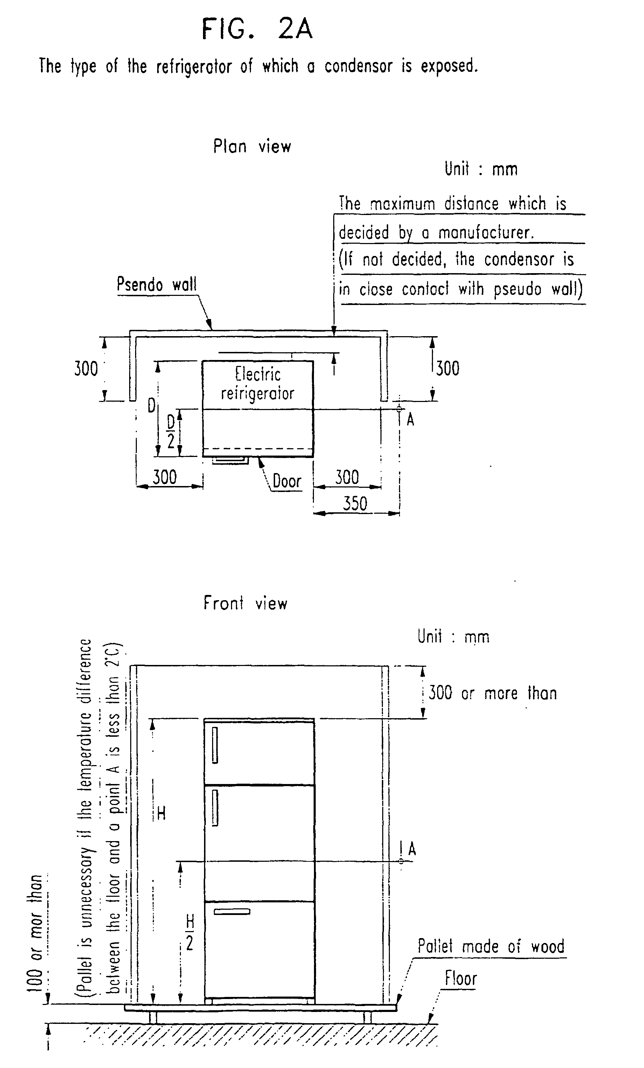

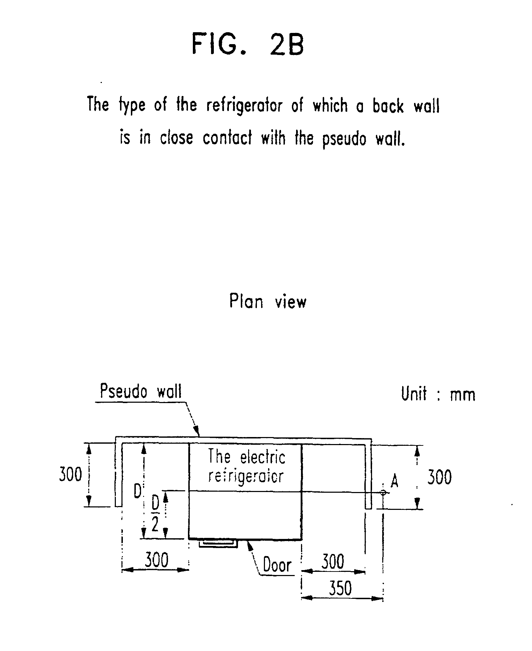

Referring to Figure 1, a refrigerator 10 to be tested is installed in a chamber which satisfies various conditions for the test required by a country. The conditions are shown in Figure 2. The conditions taken from the Korean Standards, for example KSC9305.

The refrigerator 10 monitored by a measuring device 20 to obtain the amount of electric power consumed. The measuring device 20 also satisfies the industrial standard.

A person who performs the test puts in good order the data for the power consumption which is measured by the measuring device 20 and then draws up a report of the test. The report is drafted using a word processor and printed on printer 40 to provide a hard copy of the test result. Then, a determiner determines whether the result satisfies the industrial standards. The manufacturer inspects the result of the test and finally determines a specification of the refrigerator.

In the method for measuring the electric power consumption of a refrigerator according to the prior art, there are disadvantages. Since the measuring device accumulates the electric power consumption for 24 hours, 48 hours, or 72 hours according to the number of completed defrosts and then converts the accumulated power consumption into a monthly average, much times is required for measuring the electric power consumption and also the electric power needed for the test is used proportionally to the time taken for measuring the electric power consumption.

Furthermore, since the test result data is put in order by a person who manages the test, errors may be introduced inadvertently.

A method according to the present invention is characterised by comprising the steps of:-

(a) measuring the duration of a defrosting cycle during which the heater is energised and measuring the power consumption during the defrosting cycle;
(b) measuring the duration of one operational cycle of the compressor and the power consumption during said operational cycle; and
(c) calculating a prediction for the power consumption of the refrigerator in said predetermined period from the measured durations and power consumptions and the number of defrosting cycles expected in said predetermined period.

Preferably, a method according to the present invention comprises measuring the duration of a plurality of operational cycles of the compressor and the power consumptions during said operational cycles, calculating the averages of said durations and power consumptions, and calculating the power consumption of the refrigerator in said predetermined period from the measured defrosting duration and power consumption, the averages of the compressor operation cycle durations and power consumptions and the number of defrosting cycles expected in said predetermined period.

More preferably, the power consumption is predicted using the formula:-

$$Wh = Whdef \times k + Wh\mathrm{ln} \times \left( \frac{24 \times n - DT \times k}{CT} \right)$$

where n is the number of days comprising said predetermined period, k is the number of defrosting operations expected in said predetermined period, Whdef is the power measured during a defrosting cycle, DT is the measured duration of a defrosting cycle, CT is the average compressor operation cycle time and Wh1n is the average compressor operation cycle power consumption.

Still more preferably, n is 1 if TCT < 1440, 2 if $1440 \leq$ TCT < 2880 and 3 if $2880 \leq$ TCT, where TCT = DT$\times$2+CT$\times$ (compressor operation cycles per defrost) in minutes.

Yet more preferably:

if TCT < 1440 then k = 1,
if $1440 \leq$ TCT < 2880 then k = 2,
if $2880 \leq$ TCT < 4320 then if n = 1 then k = 1 else if n = 2 then k = 2.,

where TCT = DT$\times$2+CT$\times$(compressor operation cycles per defrost) in minutes.

Preferably, said defrost cycle comprises energising the heater, de-energising the heater and waiting, energising the compressor, de-energising the compressor and waiting, energising the compressor again and de-energising the compressor.

An apparatus according to the present invention is characterised by measuring means for measuring the power consumption of a refrigerator during defrosting and refrigeration and the durations of a defrosting operation and a refrigeration cycle, and processing means for controlling the measuring means and calculating a prediction for the power consumption of the refrigerator in said predetermined period from the measured durations and power consumptions and the number of defrosting cycles expected in said predetermined period.

Preferably, an apparatus according to the present invention includes means for coupling the processing means to a network, wherein the processing means is operable to transmit said prediction via said coupling means.

Preferably, an apparatus according to the present invention includes a printer coupled to the processing means, the processing means being operable to print out said prediction using the printer.

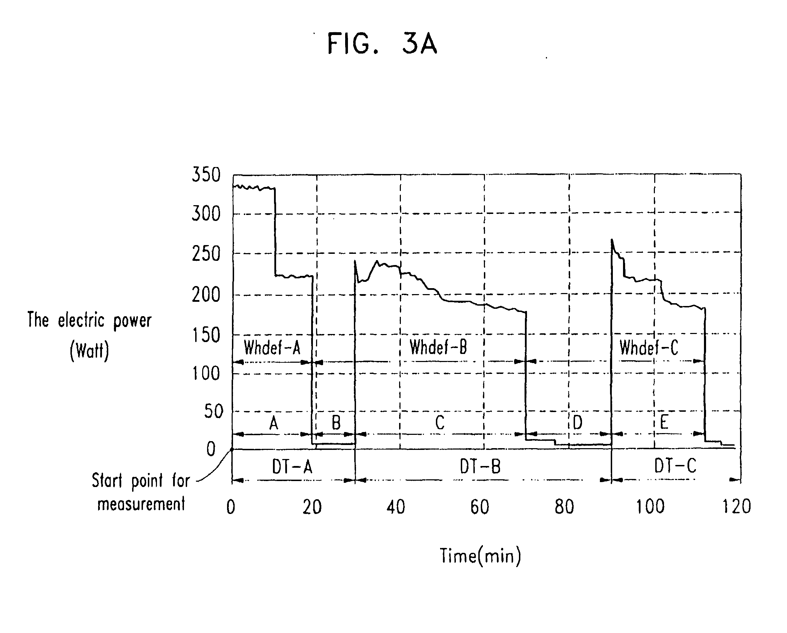

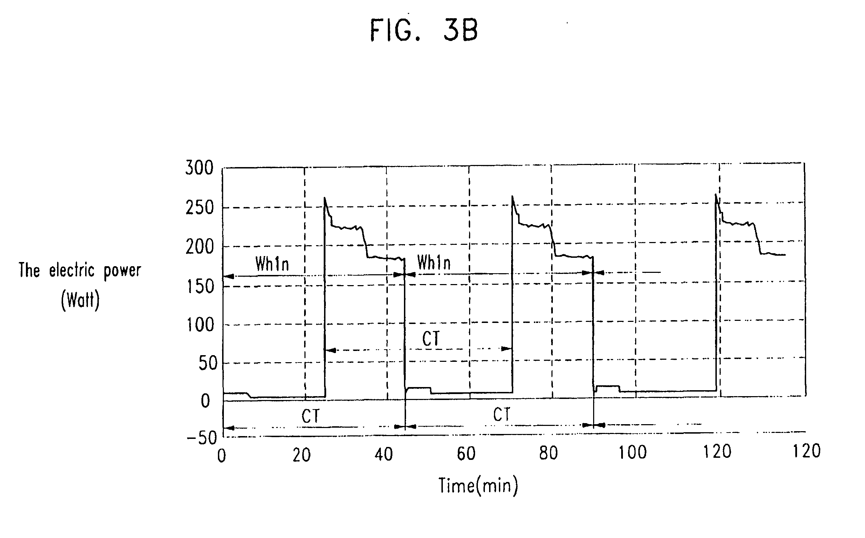

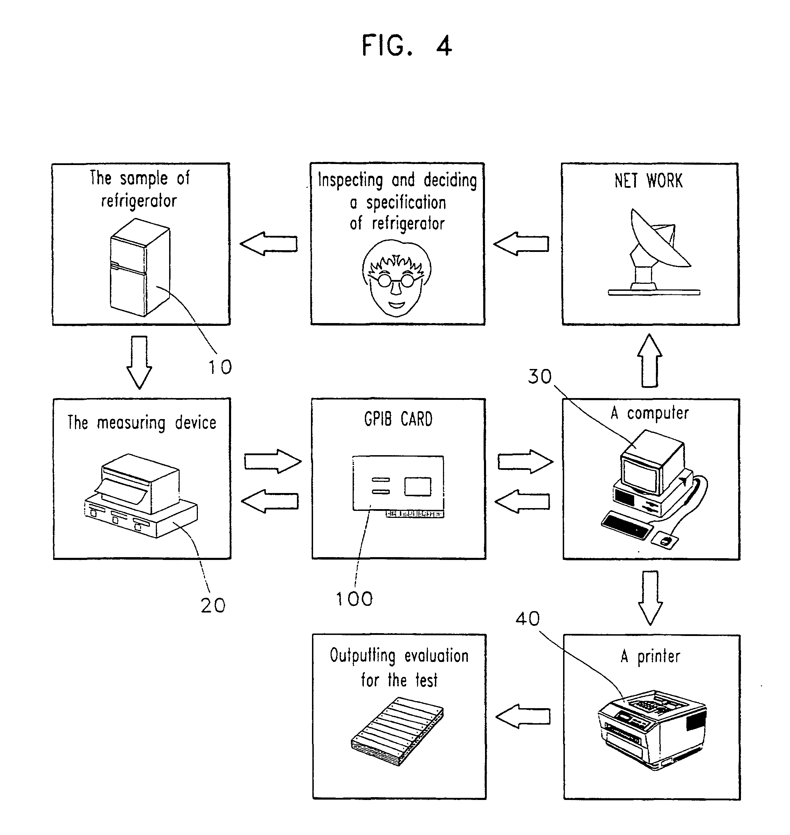

An embodiment of the present invention will now be described, by way of example, with reference to Figures 3 and 4 of the accompanying drawings, in which:-

> Figure 1 is a block diagram schematically showing a system for measuring the electric power consumption of a refrigerator according to the prior art;
> Figures 2A and 2B show conditions for measuring the electric power consumption of a refrigerator;
> Figures 3A and 3B are graphs illustrating a principle of measuring electric power consumption according to the present invention; and
> Figure 4 is a block diagram showing a system for measuring electric power consumption according to the present invention.

The present invention is made by using an electric power consumption and an operating time per operating cycle that are almost constant during operating cycles of a refrigerator, except for a compressor operating twice after a defrosting operation is carried out.

Referring to Figure 3A, Whdef-A shows the electric power consumption when current is supplied to a defrosting heater (not shown) to defrost the refrigerator (i.e. a forced defrosting is carried out). Whdef-B and Whdef-C show the electric power consumption when the compressor (not shown) operates twice after the forced defrosting. Figure 3B is a graph showing the electric power consumption Wh1n when the refrigerator operates refrigerating cycles after the forced defrosting operation has been carried out and the compressor operated twice.

Referring to Figures 3A and 3B, the Whdef-A, Whdef-B, and Whdef-C respectively show that the electric power consumption differs but the Wh1n value is always the same regardless of the number of operation cycles. Whdef-A, Whdef-B, and Whdef-C are obtained within respective times, DT-A, DT-B, and DT-C, but Wh1n is constantly obtained within a time CT, regardless of the number of operating cycles. Accordingly, when the test is carried out to measure Whdef-A, Whdef-B, Whdef-C and Wh1n using the times DT-A, DT-B, DT-C, and CT respectively, the test need not be carried out for variously 24 hours, 48 hours and 72 hours as in the case of the prior art.

The total electric power consumption Wh of the refrigerator can be calculated by from the power consumption figures Whdef-A, Whdef-B, Whdef-C, and Wh1n and the times DT-A, DT-B, DT-C, and CT, according to the formula:-
where n = 1, 2, or 3, k = 1 or 2, Wh represents the total electric power consumption of the

$$Wh = Whdef \times k + Wh1n \times \left( \frac{24 \times n - DT \times k}{CT} \right)$$

refrigerator. Whdef is the electric power consumption when the electric current is supplied to the defrosting heater and the compressor performs two operating cycles twice after the start of measurement, according to the defrosting operation under the regulations of the industrial standards as described above. Whdef is the sum of Whdef-A, Whdef-B and Whdef-C. Also, DT represents the defrosting cycle time, which is the sum of DT-A, DT-B and DT-C corresponding to Whdef-A, Whdef-B, and Whdef-C.

DT = (time for which electric current is supplied to the defrosting heater A) + (a first pause time B) + (a first compressor operating time C) + (a second pause time D) + (a second compressor operating time E). Accordingly, if the total time needed for the measurement is TCT, TCT = (DT'2)+ (CT,' the number of the refrigerating cycles in intervals between defrosting periods).

In the above formula, n is an integer, which represent a time specified in the industrial standard. k is an integer, which is the number of the defrosting operations specified in the industrial standard If TCT < 1440, n is 1 and k is 2. If 1440 < TCT < 2880, n is 2 and k is 2. If the TCT >[3] 2880, n is 3 and k is 1 or 2. k= 1 means that the number of defrosting operations is 1 in 4320 minutes and k=2 means that the number of the defrosting operations is 2 in 4320 minutes. The number 1440 is the number of minutes in 24 hours. The number 2880 is the number of minutes in 48 hours. The number 4320 is the number of minutes in 72 hours.

When the electric power consumption Wh of the refrigerator is calculated using the above formula, the electric power consumption KWhm for a month can be calculated from the following formula:

$$kWhm = \frac{Wh}{n} \times \frac{365}{12 \times 1000}$$

where 365 is the number of days in a year and 12 is the number of months in a year.

According to the method of the present invention as described above, when measuring the operating times of the defrosting heater DT-A during forced defrosting, the first operating time of the compressor DT-B after operating the defrosting heater, the second operating time of the compressor DT-C after operating the defrosting heater, and an average time of refrigeration operation CT, it is possible to substantially reduce the time required for the test to measure the electric power consumption in the refrigerator.

Furthermore, when the time for the test is substantially reduced, it is possible to reduce the amount of the electric power used during the test in proportion to the reduced time.

Employing the present invention can reduce the time require for the power consumption test to 6 hours. It has been found that errors in the measured power consumption are of the order of 1% and, therefore allowable because they fall within the 15% error margin set in the industrial standard.

A system for measuring the electric power consumption of a refrigerator will nowbe described in detail.

Referring to Figure 4, a measuring device 20 transmits data regarding the electric power consumption of the refrigerator in the form of electric signals to a computer 30. A GP-IB card 100 controls the measuring device 20 according to control signals from the computer 30. The computer 30 transmits and receives the report including the evaluation of the test through a communication network to and from the decider.

It will be understood by those skilled in the art that the GP-IB card 100 is preferably contained in the measuring device 20 or the computer 30. The computer 30 sets conditions of the test for the refrigerator satisfying the method of the present invention through the GP-IB card 100 which electrically connects the computer 30 with the measuring device 20. The computer 30 displays the data, which is obtained by the measuring device 20, on a monitor.

The data from the measuring device 20 is put in order not by the person but by the computer 30. The data which has been processed by the computer 30 is transmitted through the communication network to a person who needs the data.

The advantages which are provided by the system and method for measuring the amount of the electric power consumption according to the present invention will be described in detail below.

There are advantages in that the system and method according to the present invention can reduce the time needed for the test.

There are other advantages in that a system and method according to the present invention enable the person carrying out the test to draft the report for the test immediately and to inform designers quickly of the test results.

Furthermore, the cost of the test can be decreased by reducing the laboratory time required.

## Claims

1. A method of predicting the electrical power consumption, in a predetermined period, of a refrigerator (10) including refrigeration and freezing compartments, a compressor for compressing a working fluid of a heat pump and a defrosting heater, the method being **characterised by** comprising the steps of:-

   (a) measuring the duration of a defrosting cycle during which the heater is energised and measuring the power consumption during the defrosting cycle;
   (b) measuring the duration of one operational cycle of the compressor and the power consumption during said operational cycle; and
   (c) calculating a prediction for the power consumption of the refrigerator in said predetermined period from the measured durations and power consumptions and the number of defrosting cycles expected in said predetermined period.

2. A method according to claim 1, comprising measuring the duration of a plurality of operational cycles of the compressor and the power consumptions during said operational cycles, calculating the averages of said durations and power consumptions, and calculating the power consumption of the refrigerator in said predetermined period from the measured defrosting duration and power consumption, the averages of the compressor operation cycle durations and power consumptions and the number of defrosting cycles expected in said predetermined period.

3. A method according to claim 2, wherein the power consumption is predicted using the formula:-

$$Wh = Whdef \times k + Wh1n \times \left( \frac{24 \times n - DT \times k}{CT} \right)$$

where n is the number of days comprising said predetermined period, k is the number of defrosting operations expected in said predetermined period, Whdef is the power measured during a defrosting cycle, DT is the measured duration of a defrosting cycle, CT is the average compressor operation cycle time and Wh1n is the average compressor operation cycle power consumption.

4. A method according to claim 3, wherein n is 1 if TCT < 1440, 2 if 1440 ≤ TCT < 2880 and 3 if 2880 ≤ TCT, where TCT = DT×2+CT×(compressor operation cycles per defrost) in minutes.

5. A method according to claim 3 or 4, wherein

> if TCT < 1440 then k = 1,
> if 1440 ≤ TCT < 2880 then k = 2,
> if 2880 ≤ TCT < 4320 then if n = then k = 1 else if n=2 then k = 2.,

where TCT = DT×2+CT×(compressor operation cycles per defrost) in minutes.

6. A method according to any preceding claim, wherein said defrost cycle comprises energising the heater, de-energising the heater and waiting, energising the compressor, de-energising the compressor and waiting, energising the compressor again and de-energising the compressor.

7. An apparatus for predicting the electrical power consumption, in a predetermined period, of a refrigerator (10) including refrigeration and freezing compartments, a compressor for compressing a working fluid of a heat pump and a defrosting heater, the apparatus being **characterised by** measuring means (20) for measuring the power consumption of a refrigerator during defrosting and refrigeration and the durations of a defrosting operation and a refrigeration cycle, and processing means (30, 100) for controlling the measuring means and calculating a prediction for the power consumption of the refrigerator in said predetermined period from the measured durations and power consumptions and the number of defrosting cycles expected in said predetermined period.

8. An apparatus according to claim 7, including means for coupling the processing means (30, 100) to a network, wherein the processing means (30, 100) is operable to transmit said prediction via said coupling means.

9. An apparatus according to claim 7 or 8, including a printer (40) coupled to the processing means (30, 100), the processing means (30, 100) being operable to print out said prediction using the printer (40).

**Patentansprüche**

1. Verfahren zur Vorausberechnung des elektrischen Energieverbrauchs einer Kältemaschine (10) in einer bestimmten Zeitspanne, mit Kühlfächem und Gefrierfächern, mit einem Verdichter, der ein Arbeitsfluid einer Wärmepumpe und einer Abtauheizung komprimiert, wobei das Verfahren **gekennzeichnet ist durch** die folgenden Schritte:

> (a) Messen der Zeitdauer eines Abtauzyklus, während dessen die Heizung mit Energie versorgt wird und Messen des Energieverbrauchs während des Abtauzyklus;
> (b) Messen der Zeitdauer eines Betriebszyklus des Verdichters und dessen Energieverbrauch während des Betriebszyklus; und
> (c) Berechnen eines Vorhersagewertes für den Energieverbrauch der Kältemaschine in der bestimmten Zeitspanne, und zwar anhand der gemessenen Zeitdauern und des Energieverbrauchs und der Anzahl der Abtauzyklen, die in der bestimmten Zeitspanne zu erwarten sind.

2. Verfahren nach Anspruch 1, mit den Schritten: Messen der Zeitdauer einer Mehrzahl von Betriebszyklen des Verdichters und des Energieverbrauchs während dieser Betriebszyklen, Berechnen der Durchschnittswerte der Zeitdauern und der Energieverbräuche, und Berechnen des Energieverbrauchs der Kältemaschine in der bestimmten Zeitspanne aus der gemessenen Abtauzeitdauer und aus dem Energieverbrauch, aus den Durchschnittswerten der Verdichterbetriebszykluszeitdauern und aus den Energieverbräuchen und aus der Anzahl der Abtauzyklen, die in der bestimmten Zeitspanne zu erwarten sind.

3. Verfahren nach Anspruch 2, wobei der Energieverbrauch anhand der folgenden Formel vorausberechnet wird:

$$Wh = Whdef \; x \; k + Whln \; x \; ((24 \; x \; n - DT \; x \; k) \; /CT)$$

wobei n die Anzahl der Tage ist, die die vorbestimmte Zeitspanne umfaßt, k die Anzahl der Abtaubetriebsabläufe ist, die in der bestimmten Zeitspanne zu erwarten sind, Whdef die Energie ist, die während eines Abtauzyklus gemessen wird, DT die gemessene Zeitdauer eines Abtauzyklus ist, CT die durchschnittliche Verdichterbetriebsablaufzykluszeit ist und Whln der durchschnittliche Verdichterbetriebsablaufzyklusenergieverbrauch ist.

4. Verfahren nach Anspruch 3, wobei n gleich 1 ist, falls TCT < 1440 gilt, n gleich 2 ist, falls 1440 ≤ TCT < 2880 gilt, und n gleich 3 ist, falls 2880 ≤ TCT gilt, wobei TCT = DT x 2 + CT x (Verdichterbetriebsablaufzyklen pro Abtauvorgang) in Minuten ist.

5. Verfahren nach Anspruch 3 oder 4, wobei
   falls TCT < 1440 gilt, k = 1 ist,
   falls 1440 ≤ TCT < 2880 gilt, k = 2 ist,
   falls 2880 ≤ TCT < 4320 gilt, und n = 1 ist, dann k = 1 ist, andernfalls falls n = 2 ist, k = 2 ist, wobei TCT = DT x 2 + CT (Verdichterbetriebsablaufzyklen pro Abtauvorgang) in Minuten ist.

6. Verfahren nach einem der vorhergehenden Ansprüche, wobei der Abtauzyklus umfasst: Heizung mit Energie versorgen und Heizung nicht mit Energie versorgen, und abwarten, Verdichter mit Energie versorgen und Verdichter nicht mit Energie versorgen, und abwarten, Verdichter wieder mit Energie versorgen und Verdichter nicht mit Energie versorgen.

7. Vorrichtung zur Vorausberechnung des elektrischen Energieverbrauchs einer Kältemaschine (10) in einer bestimmten Zeitspanne, mit Kühlfächern und Gefrierfächern, mit einem Verdichter, der ein Arbeitsfluid einer Wärmepumpe und einer Abtauheizung komprimiert, wobei die Vorrichtung **gekennzeichnet ist durch** eine Messeinrichtung (20), die den Energieverbrauch einer Kältemaschine während des Abtauens und des Kühlens misst, und die die Zeitdauern eines Abtaubetriebsablaufs und eines Kühlungszyklus misst, und **durch** Verarbeitungsmittel (30, 100), die die Messeinrichtung kontrolliert und die einen Vorausberechnungswert für den Energieverbrauch der Kältemaschine in der bestimmten Zeitspanne berechnet, und zwar anhand der gemessenen Zeitdauern und der Energieverbräuche und der Anzahl der Abtauzyklen, die in der bestimmten Zeitspanne zu erwarten sind.

8. Vorrichtung nach Anspruch 7, mit Mitteln zum Verbinden der Verarbeitungsmittel (30, 100) mit einem Netzwerk, wobei die Verarbeitungsmittel (30, 100) derart betreibbar sind, dass die Vorausberechnung mittels der Verbindungsmittel übertragbar ist.

9. Vorrichtung nach Anspruch 7 oder 8, mit einem Drucker (40), der mit den Verarbeitungsmitteln (30, 100) verbunden ist, wobei die Verarbeitungsmittel (30, 100) derart betreibbar sind, dass die Vorausberechnung mittels der Druckers (40) ausgedruckt werden kann.

**Revendications**

1. Procédé de prédiction de la consommation d'énergie électrique, au cours d'une période prédéterminée, d'un réfrigérateur (10) comprenant des compartiments de réfrigération et de congélation, un compresseur pour comprimer un fluide de travail d'une pompe à chaleur et un chauffage de dégivrage, le procédé étant **caractérisé par le fait qu'**il se compose des étapes consistant à :

   (a) mesurer la durée du cycle de dégivrage, pendant lequel le chauffage est activé, et mesurer la consommation d'énergie pendant le cycle de dégivrage ;
   (b) mesurer la durée d'un cycle de fonctionnement du compresseur et la consommation d'énergie pendant ledit cycle de fonctionnement ; et
   (c) calculer une prédiction de la consommation d'énergie du réfrigérateur pendant ladite période prédéterminée, à partir des durées et des consommations d'énergie mesurées et du nombre de cycles de dégivrage attendus au cours de ladite période prédéterminée.

2. Procédé selon la revendication 1, comprenant les étapes consistant à mesurer la durée d'une pluralité de cycles de fonctionnement du compresseur et les consommations d'énergie pendant lesdits cycles de fonctionnement, calculer les moyennes desdites durées et consommations d'énergie, et calculer la consommation d'énergie du réfrigérateur sur ladite période prédéterminée à partir de la durée mesurée du dégivrage et de la consommation d'énergie, des moyennes des durées du cycle de fonctionnement du compresseur et des consommations d'énergie et du nombre de cycles de dégivrage attendus au cours de ladite période prédéterminée.

3. Procédé selon la revendication 2, dans lequel la consommation d'énergie est prédite en utilisant la formule :

$$Wh = Whdef \times k + Wh1n \times \left( \frac{24 \times n - DT \times k}{CT} \right)$$

où n est le nombre de jours composant ladite période prédéterminée, k est le nombre des opérations de dégivrage attendues au cours de ladite période prédéterminée, Whdef est la consommation d'énergie mesurée pendant un cycle de dégivrage, DT est la durée mesurée d'un cycle de dégivrage, CT est la durée moyenne des cycles de fonctionnement du compresseur et Wh1n est la consommation d'énergie moyenne d'un cycle de fonctionnement du compresseur.

4. Procédé selon la revendication 3, dans lequel n est 1 si TCT < 1440, 2 si 1440 ≤ TCT < 2880 et 3 si 2880 ≤ TCT, où TCT = DT x 2 + CT(cycles de fonctionnement du compresseur par dégivrage) en minutes.

5. Procédé selon la revendication 3 ou 4, dans lequel
   si TCT < 1440, alors k = 1,
   si 1440 ≤ TCT < 2880, alors k = 2,
   si 2880 ≤ TCT < 4320, alors si n = 1 alors k = 1, sinon, si n = 2, k = 2,
   où TCT = DT x 2 + CT(cycles de fonctionnement du compresseur par dégivrage) en minutes.

6. Procédé selon l'une quelconque des revendications précédentes, dans lequel ledit cycle de dégivrage comprend les étapes consistant à alimenter le chauffage, couper l'alimentation du chauffage et attendre, alimenter le compresseur, couper l'alimentation du compresseur et attendre, alimenter le compresseur à nouveau et couper l'alimentation du compresseur.

7. Appareil destiné à prédire la consommation d'énergie électrique, au cours d'une période prédéterminée, d'un réfrigérateur (10) comprenant des compartiments de réfrigération et de congélation, un compresseur pour comprimer un fluide de travail d'une pompe à chaleur et un chauffage de dégivrage, l'appareil étant **caractérisé par** un moyen de mesure (20) pour mesurer la consommation d'énergie d'un réfrigérateur pendant le dégivrage et la réfrigération, ainsi que les durées d'une opération de dégivrage et d'un cycle de réfrigération, et un moyen de traitement (30, 100) pour commander le moyen de mesure et calculer une prédiction de la consommation d'énergie du réfrigérateur pendant ladite période prédéterminée, à partir des durées et des consommations d'énergie mesurées et du nombre de cycles de dégivrage attendus au cours de ladite période prédéterminée.

8. Appareil selon la revendication 7, comprenant un moyen pour coupler le moyen de traitement (30, 100) à un réseau, dans lequel le moyen de traitement (30, 100) peut fonctionner afin d'envoyer ladite prédiction via ledit moyen de couplage.

9. Appareil selon la revendication 7 ou 8, comprenant une imprimante (40) couplée au moyen de traitement (30, 100), le moyen de traitement (30, 100) pouvant fonctionner pour imprimer ladite prédiction en utilisant l'imprimante (40).

# FIG. 1

# FIG. 2A

The type of the refrigerator of which a condensor is exposed.

Plan view

Unit : mm

The maximum distance which is
decided by a manufacturer.
(If not decided, the condensor is
in close contact with pseudo wall)

Psendo wall

300

Electric
refrigerator

300

D

$\dfrac{D}{2}$

A

300

Door

300

350

Front view

Unit : mm

300 or more than

H

A

$\dfrac{H}{2}$

(Pallet is unnecessary if the temperature difference
between the floor and a point A is less than 2°C)

100 or mor than

Pallet made of wood

Floor

10

# FIG. 2B

The type of the refrigerator of which a back wall
is in close contact with the pseudo wall.

Plan view

Pseudo wall                                    Unit : mm

300          D          The electric          A          300
                        refrigerator
             $\frac{D}{2}$

300                     Door          300

                                      350

# FIG. 3A

EP 0 933 606 B1

# FIG. 3B

# FIG. 4

| The sample of refrigerator | Inspecting and deciding a specification of refrigerator | NET WORK |

10

30

| The measuring device | GPIB CARD | A computer |

20

100

40

| Outputting evaluation for the test | A printer |